# EUROPEAN PATENT SPECIFICATION

(11) **EP 1 633 639 B1**
(45) Date of publication and mention of the grant of the patent: **15.11.2006**
(21) Application number: 04741689.6
(22) Date of filing: 01.06.2004
(51) Int. Cl.: B65D 1/02, B65D 41/34

(54) **PLASTIC BOTTLE NECK**
FLASCHENHALS AUS KUNSTSTOFF
GOULOT DE BOUTEILLE EN PLASTIQUE

(30) Priority: 03.06.2003 IT RM20030098 U
(43) Date of publication of application: 15.03.2006
(73) Proprietor: S.I.P.A. SOCIETA INDUSTRIALIZZAZIONE PROGETTAZIONE E AUTOMAZIONE - S.P.A., 31029 Vittorio Veneto (Treviso) (IT)
(72) Inventor: ZOPPAS, Matteo, 31015 Conegliano (IT); BARBARO, Paolo, I-31050 Ponzano Veneto (IT)
(74) Representative: Gervasi, Gemma
(86) International application number: PCT/EP2004/050974
(87) International publication number: WO 2004/106174

(56) References cited:
- FR-A- 2 758 800
- US-A- 4 732 289
- US-A- 4 801 030
- US-A- 5 443 853
- US-A- 5 472 106

## Description

### Technical Field

This invention relates to the bottle neck. More particularly, it relates to a plastic bottle neck for hot filling.

### Background Art

FR-A-2758800 discloses a bottle neck according to the preamble of appended claim 1.

Making and filling bottles with non-carbonated, sugary drinks such as tea, juice, flavoured mineral water, etc. requires the use of sterile containers and the implementation of tight controls to prevent microbiological contamination during filling. One of the techniques used in the drink bottling industry, when filling PET containers, is to fill the bottles with hot liquids at temperatures that usually range from 80 to 93°C.

The bottle must be designed specifically to absorb the depression caused by the decrease in volume of the product during cooling. The neck of the bottle must withstand the heat of the hot beverage without deforming in order not to compromise the application of the cap and the airtightness of the seal.

Normally, the neck is made of injected material that is cooled quickly. This means that the neck is made of completely amorphous PET that has a glass transition temperature (Tg) lower than the filling temperature; nevertheless, this area tends to soften and deform when it comes in contact with the hot drink.

To resolve this problem, some solutions were put forward to improve the resistance to heat when the bottle is used for hot filling. The first solution involves subjecting the necks of the bottles to post crystallization through a heat treatment. The second solution of the state-of-the-art technology involves the use of thickened necks. In this case, although the neck area remains amorphous, good airtightness is guaranteed without complicating the manufacturing process. Unfortunately, thickening the wall in the neck area means that the bottle weighs more; thus, the bottle is normally lightened by shortening the height of the neck.

When using the hot-filling technique, the use of a bottle with a short, light neck of the type marketed today for cold-filled, non-carbonated drinks has some drawbacks. This neck, which has been simply thickened to reduce the risk of deformation, is less safe: it is harder to ensure airtightness if the cap is turned slightly unintentionally without breaking the seal, which is always present on bottles that contain drinks or foodstuff that can be contaminated. This is because traditional necks designed for cold filling normally have threads placed at a very slanted angle relative to the horizontal surface; in this case, it is harder to break the seal than to make the cap no longer airtight. This increases the likelihood that the cap loses its airtightness, allowing exchanges between the sterile environment of the bottle and the outside, without this being indicated by the simultaneous breakage of the seal. Obviously, this is unacceptable from a health and safety viewpoint. To date, no satisfactory solutions have been put forward to resolve this problem.

### Objects of the Invention

It is an object of this invention to provide a neck of a plastic bottle for hot filling that resolves the aforementioned problems.

It is a main object of this invention to provide a short neck, different from the one used on bottles for cold filling, that is able to comply with the strict airtightness criteria and ensure breakage of the seal whenever the cap is turned slightly.

These objects are achieved by means of a neck in accordance with claim 1.

Thanks to the particular shape of the neck and its complementary shaped cap, the weight of the bottle is acceptable and, at the same time, perfect airtightness is guaranteed when the cap screwed on and the seal is broken immediately at the slightest turn of the cap in the opening direction.

### Brief Description of the Drawings

These and other advantages and properties of the invention shall be readily apparent from the more detailed description of the preferred version of a neck of a plastic bottle, given as a nonlimiting example and in conjunction with the following accompanying drawings:

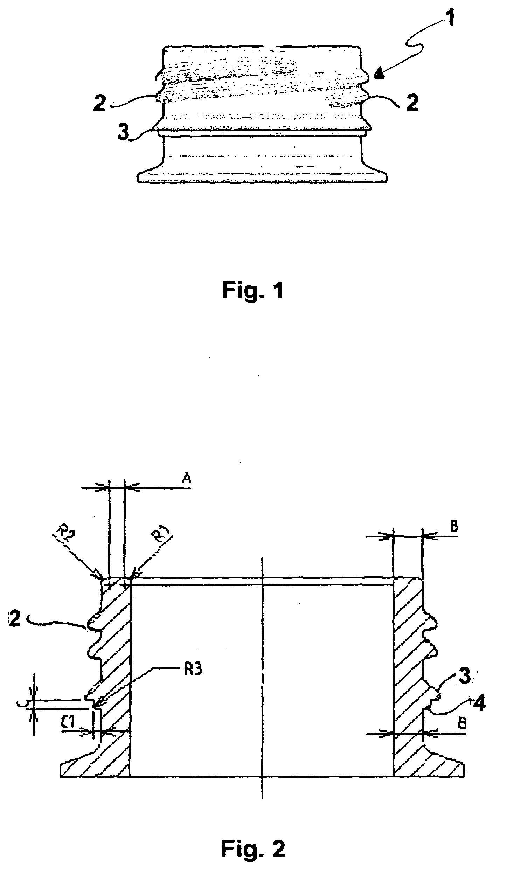

Fig. 1 shows a side view of a neck of a bottle in accordance with the invention;
Fig. 2 shows a sectional view of the neck of bottle displayed in Fig. 1.

### Description of the Invention

The Figures show a neck of a plastic bottle, hereinafter also referred to as reference 1, having a thread (2) with a particular profile. The thread (2) is double threaded: it increases the angle of rotation necessary to unscrew the cap and its development varies from 270° to 330° with the starting point of a thread distanced from the other by 150° to 210°.

In order to increase resistance to heat, the thickness (B) of the wall of the neck is greater than the one of necks for cold filling. The value of B is advantageously included between 2.0mm and 2.6mm; the value is chosen depending on the filling temperature of the beverage and, thus, depending on the structural stability required of the neck.

The change in the surface of the closure (A), meaning the increase in the surface of the upper rim of the closure due to the thickening of the wall, which creates the seal by coming into contact with the closed cap, is advantageously included between 0.9mm and 1.5mm.

To make sure that the area rests properly against the cap, ensuring airtightness, radii are used for the top rim of the neck. The values of the inside radius (R1) and outside radius (R2) of the neck are comprised between 0.4mm and 0.7mm.

To improve cap seal breakage (not shown in the figures), the shape of which is complementary to the one of the neck, a tooth (4), having essentially a square section and a height (C) and width (C1) included between 0.5mm and 1mm, is positioned at the base of the neck under the seal-ring (3). The radius (R3) ranges from 0.4mm to 0.15 mm.

The synergistic combination of these properties ensures the correct application of the plastic closure and enables the breakage of the connections of the seal of the plastic cap during opening (thus, when unscrewing the cap relative to the thread of the bottle), before air can come into contact with the beverage that, due to its nature, is generally easily contaminated.

Using a bottle with a neck like the one described above, for bottles containing non-carbonated drinks or water or used in hot filling processes, has the added important advantage of lightening the weight of the bottle compared with known necks, while preserving performance.

## Claims

1. A plastic bottle neck (1), for bottles suitable to be hot filled, comprising on the outside wall a two-start thread (2), a seal-ring (3) placed near an end of the thread, and a circular elevation (4) placed adjacent to the side of the seal-ring (3) and opposite to the one near the thread, **characterised in that** the circular elevation (4) has an essentially square shape with sides of dimensions comprised between 0.5mm and 1 mm and a radius (R3) between said sides comprised between 0,4mm and 0,15 mm, on a plane passing through the axis of the neck.

2. A neck as claimed in claim 1 wherein the thread (2) is a two-start thread with a circular development varying between 270° and 330° and start points of the two threads are at a distance comprised between 150° and 210°.

3. A neck as claimed in claim 2 wherein the thickness (B) of the wall of the neck is included between 2,0mm and 2,6mm.

4. A neck as claimed in claim 3 wherein the increase in the surface (A) of the upper rim intended to come into contact with a cap closing the bottle, which increase results from the thickening of the wall as compared to conventional bottles for cold-filling, is included between 0,9mm and 1,5min.

5. A neck as claimed in claim 4 wherein the top rim of the neck has an inside (R1) and outside (R2) radius with values ranging from 0,4mm to 0,7mm.

## Patentansprüche

1. Plastikflaschenhals (1), für Flaschen die geeignet sind heiß gefüllt zu werden, der an der äußeren Wand ein doppelgängiges Gewinde (2), einen Dichtring (3) nahe zum Ende des Gewindes und eine umlaufende Erhebung (4) aufweist, die zu der Seite des Dichtrings benachbart und gegenüber der dem Gewinde nahen Seite platziert ist,
**dadurch gekennzeichnet, dass**
die umlaufende Erhebung (4) eine im wesentlichen eckige Form mit Seiten, deren Abmessungen zwischen 0,5 mm und 1 mm liegen, und einem Radius (R3) zwischen diesen Seiten, der zwischen 0,4 mm und 0,15 mm liegt, in einer Ebene die die Achse des Halses schneidet aufweist.

2. Hals nach Anspruch 1, bei dem das Gewinde (2) ein doppelgängiges Gewinde mit einer umlaufenden, zwischen 270° und 330° variierenden Ausbildung ist und Startpunkte der zwei Gewinde bei einer Entfernung sind, die zwischen 150° und 270° enthalten ist.

3. Hals nach Anspruch 2, bei dem die Dicke (B) der Halswand zwischen 2,0 mm und 2,6 mm eingeschlossen ist.

4. Hals nach Anspruch 3, bei dem die Vergrößerung der Oberfläche (A) der oberen Kante, die dafür vorgesehen ist, mit einem die Flasche schließenden Deckel in Kontakt zu kommen, welche Vergrößerung die aufgrund der Verdickung der Wand, verglichen mit konventionellen Flaschen für Kaltfüllung, entsteht, zwischen 0,9 mm und 1,5 mm eingeschlossen ist.

5. Hals nach Anspruch 4, bei dem die obere Kante des Halses einen Innenradius (R1) und einen Außenradius (R2) mit Werten, die von 0,4 mm bis 0,7 mm reichen, aufweist.

## Revendications

1. Goulot de bouteille en plastic (1), pour des bouteilles qui conviennent au remplissage à chaud, comprenant sur la paroi extérieure un filet à deux débuts (2), un joint d'étanchéité (3) placé près d'une extrémité du filet et une élévation circulaire (4) placée d'une manière adjacente au côté du joint d'étanchéité (3) et opposée à celui près du filet, **caractérisé en ce que** l'élévation circulaire (4) a une forme essentiellement carrée, avec des côtés de dimensions compris entre 0,5mm et 1mm et un rayon (R3) entre lesdits côtés compris entre 0,4mm et 0,15mm, sur un plan passant à travers l'axe du goulot.

2. Goulot selon la revendication 1, où le filet (2) est un filet à deux débuts avec un développement circulaire variant entre 270° et 330°, et les points de départ des deux filets se trouvent à une distance comprise entre 150° et 210°.

3. Goulot selon la revendication 2, où l'épaisseur (B) de la paroi du goulot est incluse entre 2,0mm et 2,6mm.

4. Goulot selon la revendication 3, où l'augmentation de la surface (A) du bord supérieur destiné à venir en contact avec un capuchon fermant la bouteille, augmentation qui résulte de l'épaississement de la paroi en comparaison avec des bouteilles classiques pour le remplissage à froid, est incluse entre 0,9mm et 1,5mm.

5. Goulot selon la revendication 4, où le bord supérieur du goulot possède un rayon intérieur (R1) et extérieur (R2) avec des valeurs s'étendant de 0,4mm à 0,7mm.
